# NEUE EUROPÄISCHE PATENTSCHRIFT

(11) **EP 3 380 405 B2**
(45) Veröffentlichungstag und Bekanntmachung des Hinweises auf die Entscheidung über den Einspruch: **15.03.2023**
(45) Hinweis auf die Patenterteilung: 01.01.2020
(21) Anmeldenummer: 16801264.9
(22) Anmeldetag: 25.11.2016
(51) Int. Cl.: B65B 47/04, B65B 47/10, B65B 59/02, B65B 9/04, B65B 11/52, B29C 51/30, B65B 41/12, B65B 61/06

(54) **REDUZIERUNG DES KAMMERVOLUMENS BEI ZIEHTIEFENANPASSUNG IN DER SIEGELSTATION MITTELS EINER AUFBLASBAREN DICHTUNG**
REDUCTION OF THE CHAMBER VOLUME DURING DRAWING-DEPTH ADAPTATION IN THE SEALING STATION BY MEANS OF AN INFLATABLE SEAL
RÉDUCTION DU VOLUME DE CHAMBRE LORS DE L'ADAPTATION DE LA PROFONDEUR D'EMBOUTISSAGE DANS LA STATION DE SCELLEMENT AU MOYEN D'UNE GARNITURE D'ÉTANCHÉITÉ GONFLABLE

(30) Priorität: 27.11.2015 DE 102015223608
(43) Veröffentlichungstag der Anmeldung: 03.10.2018
(73) Patentinhaber: GEA Food Solutions Germany GmbH, 35216 Biedenkopf-Wallau (DE)
(72) Erfinder: MÜLLER, Sven, 35216 Biedenkopf (DE)
(74) Vertreter: Kutzenberger Wolff & Partner
(86) Internationale Anmeldenummer: PCT/EP2016/078861
(87) Internationale Veröffentlichungsnummer: WO 2017/089572

(56) Entgegenhaltungen:
- DE-B3- 10 326 670
- DE-B3-102007 037 748
- JP-A- 2002 093 770
- US-A- 3 299 608
- US-A- 5 323 590

## Beschreibung

Die vorliegende Erfindung betrifft eine Verpackungsmaschine mit einer Siegelstation und einer Schneideeinrichtung, mit der Verpackungen für Verpackungsgüter hergestellt werden, wobei die Siegelstation ein Unter- und/oder Oberwerkzeug mit mindestens einem beweglichen Teil, mit dem das Volumen einer Matrize veränderbar ist, aufweist.

Derartige Verpackungsmaschinen sind aus dem Stand der Technik bekannt und werden meist als sogenannte "Form-Fill-Seal-Verpackungsmaschinen" (FFS-Verpackungsmaschinen) bezeichnet (beispielsweise aus US 5 323 590 A, EP 2073970 B1, EP 2539125 B1, WO 2012100956 A1, US 3 299 608 A, DE 10 2007 037748, DE 103 26 670 B3, JP 2002 093770). Eine typische FFS-Verpackungsmaschine ist ein sogenannter Tiefziehautomat. Bei derartigen Verpackungsmaschinen wird in eine Folienbahn eine Verpackungsmulde durch Tiefziehen in einer Tiefziehstation eingeformt, sodann mit einem Verpackungsgut gefüllt und dann mit einer Deckelfolie in der Siegelstation verschlossen. Sowohl die Tiefziehstation als auch die Siegelstation weisen jeweils ein Unter- und/oder ein Oberwerkzeug auf, wobei mindestens ein Werkzeug der jeweiligen Station eine Matrize aufweist, in die die Folie geformt wird oder die die Verpackungsmulde beim Siegeln aufnimmt. Das Tiefziehen erfolgt in der Regel mit einem Unterdruck, der unterhalb der Matrize zur Verfügung gestellt wird. Vor dem Siegeln wird oftmals die Gaszusammensetzung in der Verpackung verändert. Dafür muss ein Unterdruck bereitgestellt werden, der Luft aus der Verpackungsmulde heraussaugt, die dann vorzugsweise durch ein anderes Gas ersetzt wird. Um ein solches Werkzeug möglichst flexibel einsetzen zu können, weisen diese Werkzeuge oftmals ein bewegliches Teil auf, mit dem insbesondere die Tiefe der Matrize und dadurch die Tiefe der resultierenden Verpackung verändert werden kann. Dieser Vorgang wird als Ziehtiefenanpassung bezeichnet, die manuell oder motorisch erfolgen kann. Bei einer Ziehtiefenanpassung wird das zu evakuierende Volumen unterhalb der Trägerplatte beeinflusst. Bei einer flacheren Verpackungsmulde, muss ein größeres Volumen evakuiert werden als bei einer tieferen Verpackungsmulde, was sich negativ auf den Herstellungspreis der flacheren Verpackungen auswirkt.

Es besteht seit langem deshalb ein Bedarf, eine Verpackungsmaschine zur Verfügung zu stellen, die die Nachteile des Standes der Technik nicht aufweist.

Gelöst wird die Aufgabe mit einer Verpackungsmaschine gemäß Patentanspruch 1.

Die vorliegende Erfindung betrifft eine Verpackungsmaschine zum Verpacken von einem Verpackungsgut, insbesondere einem Lebensmittel, vorzugsweise in einer Kunststofffolie, die auch mehrlagig und aus verschiedenen Werkstoffen bestehend ausgeführt sein kann. Die Verpackung weist eine tiefgezogene Verpackungsmulde auf, die mit dem Verpackungsgut befüllt und dann mit einem Deckel, insbesondere einer Deckelfolie verschlossen wird. Die Deckelfolie wird an die Verpackungsmulde gesiegelt. Vor dem Siegeln kann in der Verpackungsmulde ein Gasaustausch vorgenommen werden. Die Deckelfolie kann ebenfalls tiefgezogen sein. Für den Gasaustausch wird die in der noch nicht verschlossenen Verpackung vorhandene Luft teilweise abgesaugt und dadurch ein Unterdruck in der Verpackung erzeugt, der dann oder gleichzeitig durch ein anderes Gas, beispielsweise Sauerstoff, Stickstoff und/oder Kohlendioxid, ersetzt wird, wobei der Gasaustausch in der Regel in und/oder vor der Siegelstation und vor bzw. vorzugsweise nach dem Befüllen der Verpackungsmulde mit Verpackungsgut stattfindet.

Die erfindungsgemäße Verpackungsmaschine weist folglich eine Siegelstation auf, die jeweils über ein Unter- und/oder ein Oberwerkzeug verfügen, wobei das Unterwerkzeug unterhalb und das Oberwerkzeug oberhalb der Transportebene der Folienbahn, aus der die Verpackungsmulde geformt wird, angeordnet ist. Mindestens eines dieser Werkzeuge weist eine Matrize auf, in die die Unterfolie oder die Deckfolie tiefgezogen wird, bzw. die tiefgezogene Form beim Siegeln aufnimmt. In der Regel sind in dem Werkzeug eine Vielzahl von Matrizen vorgesehen, in die jeweils eine Verpackungsmulde oder eine Deckelmulde eingeformt wird, bzw. die jeweils eine Verpackungsmulde oder Deckelmulde beim Siegeln aufnehmen.

Erfindungsgemäß weist mindestens ein Werkzeug mindestens ein bewegliches Teil auf, mit dem das Volumen der Matrize veränderbar ist. Weiterhin erfindungsgemäß ist dieses bewegliche Teil in seinem Randbereich abgedichtet. Vorzugsweise wirkt diese Dichtung einerseits dichtend an dem beweglichen Teil und anderseits dichtend, beispielsweise mit dem Rahmen und/oder der Brille des jeweiligen Werkzeugs zusammenwirken. Durch die Dichtung wird ein Teil des Volumens des Werkzeugs von einer Unter- und/oder Überdruckquelle, an die das jeweilige Werkzeug angeschlossen ist abgeriegelt, so dass es an Druckveränderungen nicht mehr teilnimmt. Die Dichtung ist dabei an dem beweglichen Teil angeordnet.

Vorzugsweise ist der Querschnitt der Dichtung veränderbar. Dafür ist die Dichtung vorzugsweise zumindest teilweise hohl vorgesehen. Der Hohlraum kann wahlweise evakuiert oder mit Überdruck versehen werden. Dadurch kann die Dichtung wahlweise eine dichtende Funktion einnehmen oder nicht. Wird die Ziehtiefenverstellung beispielsweise über eine Maschinensteuerung aktiviert, wird die Dichtung entspannt, beispielwei-se entlüftet, insbesondere selbsttätig entlüftet oder die Entlüftung wird mit Vakuum unterstützt. Danach wird die gewünschte Stellung des verschieblichen Teils angefahren. Ist der eingestellte Wert erreicht, wird die Dichtung beispielsweise mit Wasser, Öl oder Luft, vorzugsweise mit dem auch in der Verpackung eingebrachten Schutzgas, unter Druck gesetzt, so dass sich ihr Querschnitt erweitert. Die Dichtung dichtet dann den jeweiligen Spalt zwischen dem beweglichen Teil und dem Unter- oder Oberwerkzeug ab. Diese Abdichtung wird dann über die folgenden Prozesse aufrecht gehalten. Erst bei einer erneuten Verstellung wird die Dichtung wieder entlastet. Im Falle einer Undichtigkeit der Dichtung, z. B. infolge Beschädigung, ist bei Verwendung von Schutzgas als Druckmedium die Qualität der Atmosphäre in der Verpackung sichergestellt.

Ein weiterer bevorzugter Gegenstand der vorliegenden Erfindung beinhaltet das Überprüfen des in der Dichtung oder im Dichtsystem anliegenden Drucks, um so auf eine potentielle Leckage z. B. infolge einer Beschädigung der Dichtung schließen zu können bzw. diese zu detektieren.

Vorzugsweise ist der bewegliche Teil direkt oder indirekt motorisch angetrieben. Zwischen dem Antrieb und dem beweglichen Teil kann ein Getriebe, beispielsweise ein Kniehebelgetriebe, vorgesehen sein. Der Antrieb kann beispielsweise ein Linear- oder Drehantrieb sein. Der Antrieb ist vorzugsweise mit einer Maschinensteuerung verbunden und wird von dieser geregelt. Dadurch kann die gewünschte Position des beweglichen Teils automatisch angefahren und dadurch die gewünschte Packungstiefe automatisch eingestellt werden. Der Antrieb stützt sich vorzugsweise an dem Rahmen des Werkzeugs ab. Vorzugsweise ist der Motor so vorgesehen, dass die Steuerung/Regelung zu jedem Zeitpunkt weiß, in welcher Position sich das bewegliche Teil befindet.

Der Antrieb befindet sich vorzugsweise innerhalb des Rahmens des Werkzeugs; alternativ befindet sich der Antrieb außerhalb des Werkzeugs, beispielsweise bei Platzmangel, wobei der Bereich, in dem zumindest ein Teil der beweglichen Antriebsmechanik, beispielsweise Schubstangen, durch die Wandung des Rahmens des Werkzeugs durchgeführt wird gleichermaßen erfindungsgemäße Dichtmittel aufweist; hiernach ist auch dieser Bereich der Durchführung durch den Rahmen gezielt abdichtbar.

Ein Antrieb, beispielsweise eine oder mehrere Schubstangen werden auch dazu verwendet, um vorzugsweise bei schweren oder empfindlichen Verpackungsgütern die befüllten Packungen z. B. in der Siegelstation zu unterstützen; der Antrieb, beispielsweise die bewegliche(n) Schubstange(n), dieser sogenannten einstellbaren Produktunterstützung wird vorzugsweise mit dem beschriebenen Dichtmittel beispielsweise im Bereich der Durchführung durch den Rahmen abgedichtet.

Vorzugsweise ist die Schubstange eines Antriebs zumindest bereichsweise hohl, um durch diesen holen Kanal das Werkzeug mit Versorgungsmedien, beispielsweise Kühlwasser oder Signalkabel zu versorgen. Um die Schubstangen vor mechanischer Überlastung zu schützen wird der Antrieb vorzugsweise innerhalb des Rahmens des Werkzeugs realisiert.

Im Folgenden wird die Erfindung anhand der Figuren erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- **Figur 1**: zeigt die erfindungsgemäße Verpackungsmaschine
- **Figur 2**: zeigt das Werkzeug, hier ein Tiefziehwerkzeug
- **Figur 3**: zeigt die Dichtung
- **Figur 4**: zeigt das Werkzeug im nicht abgedichteten Zustand
- **Figur 5**: zeigt das Werkzeug im abgedichteten Zustand
- **Figuren 6 und 7**: zeigen eine um das bewegliche Teil umlaufende Dichtung

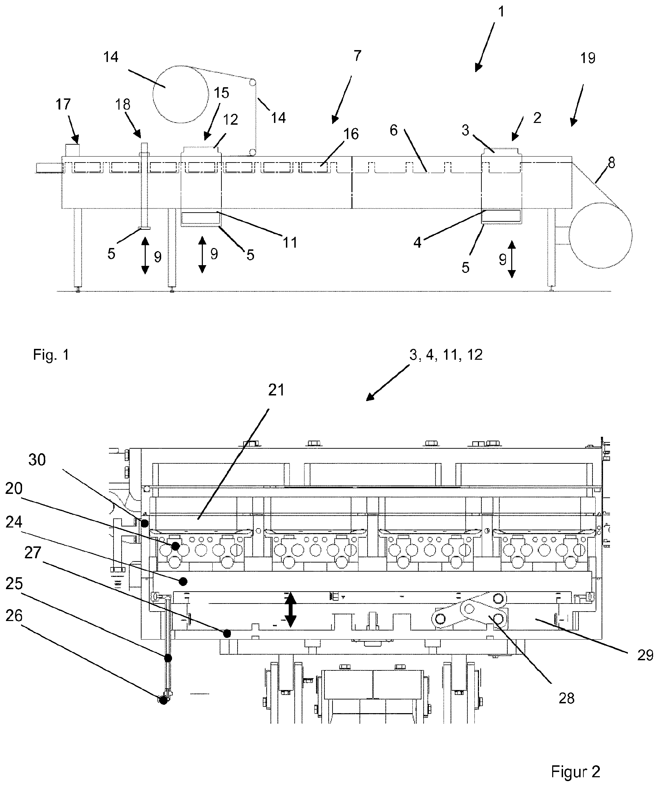

Figur 1 zeigt die erfindungsgemäße Verpackungsmaschine 1, die eine Tiefziehstation 2, eine Füllstation 7 sowie eine Siegelstation 15 aufweist. Eine Kunststofffolienbahn 8, die sogenannte Unterfolienbahn, wird von einer Vorratsrolle abgezogen und, vorzugsweise taktweise, entlang der erfindungsgemäßen Verpackungsmaschine hier von rechts nach links transportiert. Bei einem Takt wird die Folienbahn um eine Formatlänge weitertransportiert. Dafür weist die Verpackungsmaschine zwei Transportmittel (nicht dargestellt), in dem vorliegenden Fall jeweils zwei Endlosketten auf, die rechts und links von der Folienbahn angeordnet sind. Jede Endloskette weist Haltemittel auf, die jeweils mit einer Kante der Folienbahn zusammenwirken. Sowohl am Anfang als auch am Ende der Verpackungsmaschine ist für jede Kette jeweils mindestens ein Zahnrad vorgesehen, um das die jeweilige Kette umgelenkt wird. Mindestens eines dieser Zahnräder ist angetrieben. Die Zahnräder im Einlaufbereich 19 und/oder im Auslaufbereich können miteinander, vorzugsweise durch eine starre Welle, verbunden sein. Jedes Transportmittel weist eine Vielzahl von Klemmmitteln auf, die die Unterfolienbahn 8 im Einlaufbereich klemmend ergreifen und die Bewegung des Transportmittels auf die Unterfolienbahn 8 übertragen. Im Auslaufbereich der Verpackungsmaschine wird die klemmende Verbindung zwischen dem Transportmittel und der Unterfolienbahn wieder gelöst. In der Tiefziehstation 2, die über ein Oberwerkzeug 3 und ein Unterwerkzeug 4 verfügt, das die Form der herzustellenden Verpackungsmulde aufweist, werden die Verpackungsmulden 6 in die Unterfolienbahn 8 eingeformt. Das Unterwerkzeug 4 ist auf einem Hubtisch 5 angeordnet, der, wie durch den Doppelpfeil symbolisiert wird, vertikal verstellbar ist. Vor jedem Folienvorschub wird das Unterwerkzeug 4 abgesenkt und danach wieder angehoben. Im weiteren Verlauf der Verpackungsmaschine werden die Verpackungsmulden dann in der Füllstation 7 mit dem Verpackungsgut 16 gefüllt. In der sich daran anschließenden Siegelstation 15, die ebenfalls aus einem Oberwerkzeug 12 und einem vertikal verstellbaren Unterwerkzeug 11 besteht, wird eine Oberfolienbahn auf die Verpackungsmulde gesiegelt. Auch in der Siegelstation werden das Oberwerkzeug und/oder das Unterwerkzeug vor und nach jedem Folientransport abgesenkt bzw. angehoben. Auch die Oberfolienbahn 14 kann tiefgezogen und/oder in Transportmitteln geführt sein bzw. von Transportketten transportiert werden, wobei sich diese Transportmittel dann nur von der Siegelstation und ggf. stromabwärts erstrecken. Ansonsten gelten die Ausführungen, die zu den Transportmitteln der Unterfolienbahn gemacht wurden. Im weiteren Verlauf der Verpackungsmaschine werden auch die fertiggestellten Verpackungen vereinzelt, was mit dem Schneidwerkzeugen 17, 18 erfolgt. Das Schneidwerkzeug 18 ist in dem vorliegenden Fall ebenfalls mit einer Hubeinrichtung 9 anhebbar bzw. absenkbar. Der Fachmann erkennt, dass bei einem Takt vorzugsweise mehrere Verpackungsmulden tiefgezogen, befüllt und verschlossen werden.

**Figuren 2****,** **4****,** **5 und 6** zeigen das erfindungsgemäße Siegelwerkzeug, im Folgenden "Werkzeug". Dies weist einen hier kastenartigen Rahmen 27 auf, in dem mehrere Matrizen 21 vorgesehen sind, die zum Formen der Unter- oder Deckelfolie eingesetzt werden und/oder als Aufnahme der Verpackungsmulde oder des geformten Deckels beim Siegeln dienen. In dem vorliegenden Beispiel sind vier Matrizen 21 zu sehen. Der Boden jeder Matrize, die sogenannte Formschale 20, ist in dem vorliegenden Fall verschieblich vorgesehen und mit einer Trägerplatte 24 verbunden, die ihrerseits verschieblich in dem Rahmen 27 des Werkzeugs angeordnet ist. Wie durch den Doppelpfeil angedeutet, können die Trägerplatte 24 und die Formschale jeder Matrize angehoben oder abgesenkt werden. Dadurch kann das Volumen der Matrize verändert werden. In der obersten Stellung der Formschale 20 werden vergleichsweise flache und in der untersten vergleichsweise tiefe Verpackungen hergestellt. Die Trägerplatte 27 wird in dem vorliegenden Fall durch einen oder mehrere Kniehebel angetrieben. Im Randbereich der Trägerplatte ist eine Dichtung 22 vorgesehen, die einen Hohlraum 25 im Querschnitt aufweist. Dieser Hohlraum kann mittels einer Leitung 25 an eine Unter- und/oder Überdruckquelle angeschlossen werden, so dass die Dichtung zusammengezogen (Unterdruck) oder ausgedehnt (Überdruck) werden kann. Die Dichtung 22 dichtet den Raum 29 zwischen der Trägerplatte und dem Rahmen ab, so dass dieser Raum von einem Unter und/oder Überdruck, der im Bereich der Matrizen vorgesehen wird, isoliert ist.

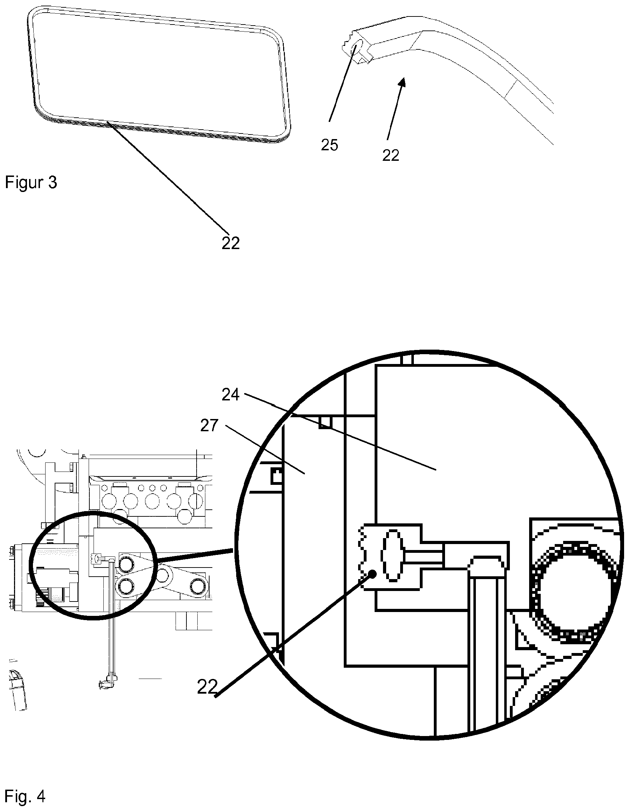

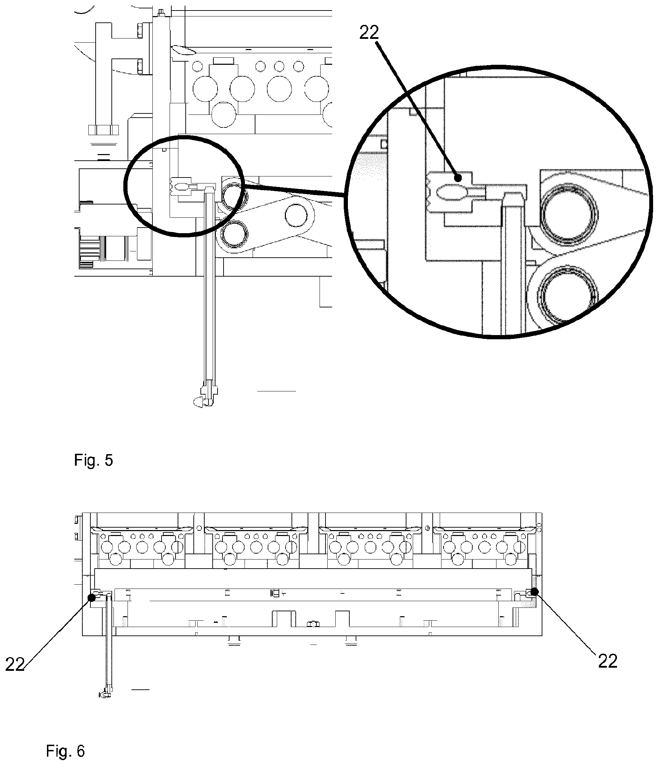

Bevor eine Verstellung der Trägerplatte 24 relativ zu dem Rahmen 27 erfolgt, wird die Dichtung 22 entspannt oder in ihrem Querschnitt zusammengezogen, was in Figur 4 dargestellt ist. Nach der Veränderung der Stellung der Trägerplatte wird die Dichtung 22 wieder mit Druck beaufschlagt, so dass sie sich an dem Rahmen 27 angelegt und somit den Spalt zwischen dem Rahmen und der Trägerplatte abdichtet (vgl. Figur 5).

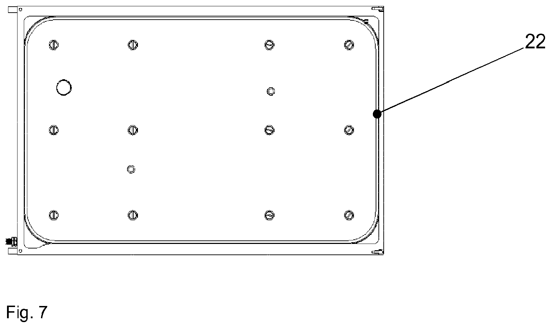

Die Dichtung 22 ist im Randbereich der Trägerplatte, hier am Umfang vorgesehen und umschließt diesen vollständig (vgl. Figur 7). Wie in Figur 3 zu sehen ist, weist sie einen Hohlraum 25 auf, der mit einer Über- und/oder Unterdruckquelle verbunden werden kann. Der Hohlraum kann mit Luft, Öl oder Wasser, vorzugsweise mit dem auch in der Verpackung eingebrachten Schutzgas, gefüllt sein. Die Kontaktfläche der Dichtung 22 zu dem Rahmen 27 kann ein Profil aufweisen, was ebenfalls in Figur 3 zu sehen ist.

### Bezugszeichenliste:

- 1: Verpackungsmaschine
- 2: Tiefziehstation
- 3: Oberwerkzeug der Tiefziehstation
- 4: Unterwerkzeug der Tiefziehstation
- 5: Hubtisch, Träger eines Werkzeugs der Siegel- , Tiefziehstation und/oder der Schneideinrichtung
- 6: Verpackungsmulde
- 7: Füllstation
- 8: Unterfolienbahn
- 9: Hubeinrichtung
- 10: Antrieb
- 11: Unterwerkzeug der Siegelstation
- 12: Oberwerkzeug der Siegelstation
- 13: Kolbenstange
- 14: Oberfolie
- 15: Siegelstation
- 16: Verpackungsgut
- 17: Längsschneider
- 18: Querschneider
- 19: Einlaufbereich
- 20: bewegliches Teil, Formschale
- 21: Matrize
- 22: Dichtung
- 23: Randbereich
- 24: Trägerplatte
- 25: Leitung
- 26: Über- und/oder Unterdruckquelle
- 27: Rahmen
- 28: Antrieb
- 29: Hohlraum
- 30: Brille (Siegelwerkzeug); Formwerkzeug

## Patentansprüche

1. Verpackungsmaschine (1) mit einer Siegelstation (15) und einer Schneideeinrichtung (17, 18), mit der Verpackungen für Verpackungsgüter hergestellt werden, wobei die Siegelstation (15) ein Unter- und/oder Oberwerkzeug (11, 12) mit mindestens einem beweglichen Teil, (24) aufweist, mit dem das Volumen einer Matrize (21) veränderbar ist, wobei das bewegliche Teil (24) eine Trägerplatte (24) ist, auf der mindestens eine Formschale (20) vorgesehen ist, **dadurch gekennzeichnet, dass** der Randbereich des beweglichen Teils (24) des Siegelwerkzeugs mit einer Dichtung (22) so abgedichtet ist, dass ein Teil des Volumens des Werkzeugs von einer Unter- und/oder Überdruckquelle, an die das jeweilige Werkzeug angeschlossen ist, abgeriegelt ist.

2. Verpackungsmaschine (1) nach Anspruch 1, **dadurch gekennzeichnet, dass** der Querschnitt der Dichtung veränderbar ist.

3. Verpackungsmaschine (1) nach einem der voranstehenden Ansprüche, **dadurch gekennzeichnet, dass** bewegliche Teil (20) direkt oder indirekt motorisch angetrieben ist, wobei der Antrieb vorzugsweise zumindest teilweise insbesondere gegenüber dem Werkzeug abgedichtet ist.

4. Verpackungsmaschine (1) nach einem der voranstehenden Ansprüche, **dadurch gekennzeichnet, dass** die Dichtung mit einer Über- und/oder Unterdruckquelle (26) verbunden ist.

5. Verpackungsmaschine (1) nach einem der voranstehenden Ansprüche, **dadurch gekennzeichnet, dass** sie einen Sensor aufweist, der den Druck in der Dichtung überprüft.

## Claims

1. Packaging machine (1) having a sealing station (15) and a cutting device (17, 18), with which packs for goods to be packed are produced, wherein the sealing station (15) has a lower and/or upper mould (11, 12) with at least one movable part (24), with which the volume of a die (21) can be varied, wherein the movable part (24) is a carrier plate (24) on which at least one mould shell (20) is provided, **characterized in that** the edge region of the movable part (24) of the sealing mould is sealed off with a seal (22) such that part of the volume of the mould is sealed off by a negative and/or positive pressure source, to which the respective mould is connected.

2. Packaging machine (1) according to Claim 1, **characterized in that** the cross section of the seal can be varied.

3. Packaging machine (1) according to one of the preceding claims, **characterized in that** the movable part (20) is directly or indirectly motor-driven, wherein the drive is preferably at least partly sealed off, in particular with respect to the mould.

4. Packaging machine (1) according to one of the preceding claims, **characterized in that** the seal is connected to a positive and/or negative pressure source (26).

5. Packaging machine (1) according to one of the preceding claims, **characterized in that** it has a sensor which checks the pressure in the seal.

## Revendications

1. Machine d'emballage (1) comprenant une station de scellement (15) et un dispositif de coupe (17, 18) permettant de fabriquer des emballages destinés à des produits à emballer, la station de scellement (15) comportant des outils inférieur et/ou supérieur (11, 12) pourvus d'au moins une partie mobile (24) permettant de faire varier le volume d'une matrice (21), la partie mobile (24) étant une plaque de support (24) sur laquelle au moins une coque de moule (20) est prévue, **caractérisée en ce que** la région de bord de la partie mobile (24) de l'outil de scellement est rendue étanche au moyen d'une garniture d'étanchéité (22) de sorte qu'une partie du volume de l'outil est verrouillée vis-à-vis d'une source de dépression et/ou de surpression à laquelle l'outil correspondant est raccordé.

2. Machine d'emballage (1) selon la revendication 1, **caractérisée en ce que** la section transversale de la garniture d'étanchéité est variable.

3. Machine d'emballage (1) selon l'une des revendications précédentes, **caractérisée en ce que** la partie mobile (20) est entraînée directement ou indirectement par un moteur, l'entraînement étant de préférence au moins partiellement étanche notamment par rapport à l'outil.

4. Machine d'emballage (1) selon l'une des revendications précédentes, **caractérisée en ce que** la garniture d'étanchéité est reliée à une source de surpression et/ou de dépression (26).

5. Machine d'emballage (1) selon l'une des revendications précédentes, **caractérisée en ce qu'**elle comprend un capteur qui contrôle la pression dans la garniture d'étanchéité.
